(19) Europäisches Patentamt
European Patent Office
Office européen des brevets

(11) **EP 4 550 928 A1**

(12) **EUROPEAN PATENT APPLICATION**

(43) Date of publication:
07.05.2025 Bulletin 2025/19

(21) Application number: 24209582.6

(22) Date of filing: 29.10.2024

(51) International Patent Classification (IPC):
*H04W 76/15* (2018.01)    *H04W 84/12* (2009.01)

(52) Cooperative Patent Classification (CPC):
**H04W 76/15; H04W 74/0808;** H04W 48/00;
H04W 84/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 03.11.2023 GB 202316873

(71) Applicant: **Nokia Technologies Oy**
**02610 Espoo (FI)**

(72) Inventors:
• **FONTANESI, Gianluca Attilio**
**70190 Stuttgart (DE)**
• **GALATI GIORDANO, Lorenzo**
**70374 Stuttgart (DE)**
• **WILHELMI, Francisco**
**70839 Gerlingen (DE)**

(74) Representative: **Script Intellectual Property LLP**
**Suite J, Anchor House**
**School Close**
**Chandlers Ford**
**Eastleigh, Hampshire SO53 4DY (GB)**

(54) **CONTINUOUS MODE MULTI-LINK COMMUNICATION BETWEEN APPARATUS IN THE UNLICENSED SPECTRUM**

(57)     A non-access point apparatus may communicate in a continuous or near continuous mode with an access point apparatus. To initiate this mode the non-access point apparatus may indicate to the access point apparatus that continuous multi-link mode operation is to be enabled by setting a subfield in a multi-link element within an association or reassociation request to a pre-determined value. This request may then be transmitted to the access point apparatus, which if it supports such a mode may indicate this in a response.

FIG. 5

EP 4 550 928 A1

**Description**

TECHNOLOGICAL FIELD

Various example embodiments relate to communications within the unlicensed spectrum.

BACKGROUND

The unlicensed spectrum provides an opportunity to increase the bandwidth available for signals to be transmitted. However, as this bandwidth is shared with other devices scanning may be required prior to transmission to reduce interference. Furthermore, there may be rules regarding how often a device can scan to allow the spectrum to be fairly shared and these issues can lead to increased latency.

The unlicensed band is divided into sub-bands or channels each covering a certain frequency band. Scanning procedures such as listen before talk LBT, which involves, the sensing of a channel to determine whether it is available, may be used prior to transmitting a signal. Where it is determined that the channel is available then it may be acquired by the node for a predetermined occupancy time which may be termed a channel occupancy time COT. During this time signals may be sent and other nodes are deterred from using the channel.

Increasingly devices are able to transmit and receive on more than one channel and this may be used to increase throughput and/or increase reliability. A potential problem may arise with discontinuities in communication when the occupancy period in one channel expires and a further channel is yet to be acquired.

BRIEF SUMMARY

The scope of protection sought for various example embodiments of the disclosure is set out by the independent claims. The example embodiments and features, if any, described in this specification that do not fall under the scope of the independent claims are to be interpreted as examples useful for understanding various embodiments of the invention.

According to various, but not necessarily all, example embodiments of the disclosure there is provided a non-access point apparatus configured for multi-link communication, said non-access point apparatus comprising at least one processor; and at least one memory storing instructions that when executed by the at least one processor cause the apparatus at least to perform: indicating to an access point apparatus that continuous multi-link mode operation is to be enabled by: setting a subfield in a multi-link element within an association or reassociation request to a predetermined value; causing transmission of said association or re-association request to said access point apparatus.

Continuous, sometimes termed near-continuous, multi-link operation is operation where two apparatus are communicating and have at least one channel available at any time. That is there is a channel acquired for an occupancy time that is ongoing and /or available for the two apparatus. Such a mode allows latency in communications to be reduced but requires cooperation between the two apparatus. Thus, in order to initiate such a procedure, one apparatus may need to indicate to the other that such a mode is enabled. Aspects do this using fields or subfields in existing association or re-association requests, thereby allowing the information to be passed without increasing or unduly changing existing signalling.

This signalling may be performed during a multi-link set up or reset up procedure with the access point apparatus.

Association and re-association requests are signals transmitted between apparatus during the multi-link set up procedure. Thus, the use of these signals to indicate the enabling of continuous mode operation allows this mode to be initiated at a time when the nodes are being set up or re-set up to communicate with each other. In this way potential latency in the initiation of such a mode is avoided or at least reduced and there may be no, or very little, overhead of additional signalling. These request signals have fields or subfields within the signal elements or frames, and the values in these fields or subfields are defined as providing certain information. Thus, embodiments define a field or subfield as denoting whether continuous multi-link operation is to be enabled, allowing this information to be transmitted at an appropriate time in the multi-link procedure using signalling already used in the multi-link set up or reset up procedure.

In this embodiment, the non-access point apparatus is the first initiating device and signals transmitted from it to the access point device are uplink signals. Those transmitted from the access point device to the non-access point device are downlink signals.

In some example embodiments, said subfield comprises a reserved subfield in a multi-link device capabilities and operations subfield within a common info field of said multi-link element.

In some example embodiments, in response to receipt of an association or reassociation response, said apparatus is caused to: determine from a value within a multi-link device capabilities subfield of said response whether said access point apparatus agrees to operate in said continuous multi-link mode operation; and where so to perform scanning and acquiring of a channel for a predetermined occupancy time.

In some example embodiments, said apparatus is caused to perform scanning and acquiring of a channel for a predetermined occupancy time by: scanning at least one channel; acquiring an available scanned channel for a predetermined occupancy time; and indicating to said access point apparatus that said non-access point apparatus has acquired a channel for said predetermined occupancy time.

In some example embodiments, said non-access point apparatus is caused to indicate acquiring of said channel for a predetermined occupancy time to said access point apparatus by: setting at least one subfield in a stream classification service SCS signal to a value indicative of at least one of the following: a start time of said acquired predetermined occupancy time; a duration of said acquired predetermined occupancy time; and transmitting said SCS signal to said access point apparatus.

In some example embodiments, said non-access point apparatus is caused to indicate both said start time of said acquired predetermined occupancy time and said duration of said acquired predetermined occupancy time by setting subfields in said stream classification service SCS signal.

In some example embodiment said SCS signal comprises a SCS request.

In some example embodiments, said at least one subfield within the SCS signal is within a quality of service QOS characteristic element.

In some example embodiments, said quality of service QOS characteristic element is contained in a SCS descriptor element of SCS Traffic description support.

In some example embodiments, said start time of said acquired predetermined occupancy time is indicated by setting a service start time subfield to a value indicative of said predetermined occupancy time start time, said service start time subfield being within a control info subfield of said QOS characteristic element.

In some example embodiments, said duration of said predetermined occupancy time is indicated by setting a maximum service interval subfield within said QOS characteristic element to a value indicative of said duration.

In some example embodiments, said non access point apparatus is configured to indicate to said access point apparatus that a plurality of communications using a plurality of acquired predetermined occupancy times are to be transmitted from said non-access point apparatus to said access point apparatus by transmitting at least one further SCS signal, said at least one further SCS signal indicating at least one further acquired predetermined occupancy time start time and duration.

In some example embodiments, said apparatus is caused to start a scan of at least one other channel at a time that is an estimated time for said non-access point apparatus to perform said scan of said other channel before an expiry of said indicated acquired predetermined occupancy time.

In some example embodiments, said non-access point apparatus is caused to respond to receipt of an SCS signal indicating at least the following: a start time of an acquired predetermined occupancy time and a duration of said predetermined occupancy time by causing said non-access point apparatus to initiate scanning of a channel at a time that is an estimated time LBTS that said non- access point apparatus can scan and deem a channel available before an expiry of said indicated acquired predetermined occupancy time.

In some example embodiments, said received SCS signal comprises a SCS response.

According to various, but not necessarily all, example embodiments of the disclosure there is provided an access point apparatus comprising at least one processor; and at least one memory storing instructions that when executed by the at least one processor cause the apparatus at least to perform: receiving an association or reassociation request from a non-access point apparatus; determining from a value of a subfield in a multi-link element that said non-access point apparatus requests that continuous multilink mode operation is enabled: and setting a subfield in a multi-link element within an association or reassociation response to a predetermined value indicating that said request is accepted; causing transmission of said association or re-association response to said non- access point apparatus.

In some example embodiments, said access point apparatus is caused to respond to receipt of an SCS signal indicating at least: a start time of an acquired predetermined occupancy time of said non-access point apparatus and a duration of said predetermined occupancy time, by initiating scanning of a channel at a time that is an estimated time LBTS that said access point apparatus can scan and deem a channel available before an expiry of said indicated acquired predetermined occupancy time.

In some example embodiments, said apparatus is caused to perform scanning and acquiring a channel for a predetermined occupancy time in response to receipt of said SCS signal by: scanning said channel; acquiring an available scanned channel for a predetermined occupancy time; and indicating to said non-access point apparatus that said access point apparatus has acquired a predetermined occupancy time and providing an indication of a duration of said predetermined occupancy time.

In some example embodiments, said access point apparatus is configured to respond to receipt of said SCS signal by setting a status subfield within an SCS response signal to a value indicating success, that is said that said SCS signal is accepted.

In some example embodiments, said access point apparatus is caused to indicate to said non-access point apparatus by: setting at least one subfield in a stream classification service SCS signal to a value indicative of at least one of the following: a start time of said acquired predetermined occupancy time; a duration of said acquired predetermined occupancy time; and transmitting said SCS signal to said non-access point apparatus.

In some example embodiments, said subfield is within a quality of service QOS characteristic element.

In some example embodiments, said start time of said acquired predetermined occupancy time is indicated by setting a service start time subfield to a value indicative of said predetermined occupancy time start time, said service start time subfield being within a control info field of said QOS characteristic element.

In some example embodiments, said duration of said predetermined occupancy time is indicated by setting a maximum service interval subfield within said QOS characteristic element to a value indicative of said duration.

In some example embodiments, said transmitted SCS signal comprises a SCS response signal, and said received SCS signal comprises a SCS request signal.

In some example embodiments said SCS signal comprising said start time and duration of said COT is a same SCS response signal as said SCS response signal comprising said indication of success. In other embodiments they are two different SC responses.

In some example embodiments, said access point apparatus is caused to perform indicating to said non-access point apparatus that a plurality of communications using a plurality of predetermined occupancy times are to be transmitted from said access point apparatus to said non-access point apparatus by transmitting at least one further SCS signal, said at least one further SCS signal indicating at least one further predetermined occupancy time start time and duration.

According to various, but not necessarily all, example embodiments of the disclosure there is provided a method performed at a non-access point apparatus, said method comprising: indicating to an access point apparatus that continuous multi-link mode operation is to be enabled by: setting a subfield in a multi-link element within an association or reassociation request to a predetermined value; transmitting said association or re-association request to said access point apparatus.

In some example embodiments, said method comprises in response to receipt of an association or re-association response, determining from a value within a multi-link device capabilities subfield of said response whether said access point apparatus agrees to operate in said continuous multi-link mode operation; and where so performing scanning and acquiring of a channel for a predetermined occupancy time.

In some example embodiments, said method comprises scanning and acquiring of a channel for a predetermined occupancy time by: scanning at least one channel; acquiring an available scanned channel for a predetermined occupancy time; and indicating to said access point apparatus that said non-access point apparatus has acquired said channel for said predetermined occupancy time.

In some example embodiments, said method further comprises indicating acquiring of said predetermined occupancy time to said access point apparatus by: setting at least one subfield in a stream classification service SCS signal to a value indicative of at least one of the following: a start time of said acquired predetermined occupancy time; a duration of said acquired predetermined occupancy time; and transmitting said SCS signal to said access point apparatus.

In some example embodiments, said method comprises indicating both said start time of said acquired predetermined occupancy time and said duration of said acquired predetermined occupancy time by setting subfields in said stream classification service SCS signal.

In some example embodiments, said method comprises indicating a start time of said acquired predetermined occupancy time by setting a service start time subfield to a value indicative of said predetermined occupancy time start time, said service start time subfield being within a control info subfield of said QOS characteristic element.

In some example embodiments, said method comprises indicating said duration of said predetermined occupancy time by setting a maximum service interval subfield within said QOS characteristic element to a value indicative of said duration.

In some example embodiments, said method comprises indicating to said access point apparatus that a plurality of communications using a plurality of acquired predetermined occupancy times are to be transmitted from said non-access point apparatus to said access point apparatus by transmitting at least one further SCS signal, said at least one further SCS signal indicating at least one further acquired predetermined occupancy time start time and duration.

In some example embodiments, said method comprises starting a scan of at least one other channel at a time that is an estimated time for said non-access point apparatus to perform said scan of said other channel before an expiry of said indicated acquired predetermined occupancy time.

In some example embodiments, said method comprises responding to receipt of an SCS signal indicating at least the following: a start time of an acquired predetermined occupancy time and a duration of said predetermined occupancy time by initiating scanning of a channel at a time that is an estimated time LBTS that said non- access point apparatus can scan and deem a channel available before an expiry of said indicated acquired predetermined occupancy time.

According to various, but not necessarily all, example embodiments of the disclosure there is provided a method performed at an access point apparatus, said method comprising: receiving an association or reassociation request from a non-access point apparatus; determining from a value of a subfield in a multi-link element that said non-access point apparatus requests that continuous multi-link mode operation is enabled: and setting a subfield in a multi-link element within an association or reassociation response to a predetermined value indicating that said request is accepted ;

transmitting said association or re-association response to said non- access point apparatus.

In some example embodiments, said method comprises responding to receipt of an SCS signal indicating at least: a start time of an acquired predetermined occupancy time of said non-access point apparatus and a duration of said predetermined occupancy time, by initiating scanning of a channel at a time that is an estimated time LBTS that said access point apparatus can scan and deem a channel available before an expiry of said indicated acquired predetermined occupancy time.

In some example embodiments, said method comprises the step of scanning and acquiring a channel for a predetermined occupancy time in response to receipt of said SCS signal by: scanning said channel; acquiring an available scanned channel for a predetermined occupancy time; and indicating to said non-access point apparatus that said access point apparatus has acquired a channel for said predetermined occupancy time and providing an indication of a duration of said predetermined occupancy time.

In some example embodiments, said method comprises responding to receipt of said SCS signal by setting a status subfield within an SCS response signal to a value indicating success, that is said that said SCS signal is accepted.

In some example embodiments, said method comprises indicating to said non-access point apparatus by: setting at least one subfield in a stream classification service SCS signal to a value indicative of at least one of the following: a start time of said acquired COT; a duration of said acquired predetermined occupancy time; and transmitting said SCS signal to said non-access point apparatus.

In some example embodiments, said method performs indicating to said non-access point apparatus that a plurality of communications using a plurality of acquired predetermined occupancy times are to be transmitted from said access point apparatus to said non-access point apparatus by transmitting at least one further SCS signal, said at least one further SCS signal indicating at least one further acquired predetermined occupancy time start time and duration.

According to various, but not necessarily all, example embodiments of the disclosure there is provided a computer program comprising computer readable instructions which when executed by a processor on a non-access point apparatus are operable to control said apparatus to: indicate to an access point apparatus that continuous multilink mode operation is to be enabled by: setting a subfield in a multi-link element within an association or reassociation request to a predetermined value; and transmitting said association or re-association request to said access point apparatus.

According to various, but not necessarily all, example embodiments of the disclosure there is provided a computer program comprising computer readable instructions which when executed by a processor on an access point apparatus, are operable to control said apparatus to: receive an association or reassociation request from a non-access point apparatus; determine from a value of a subfield in a multi-link element that said non-access point apparatus requests that continuous multi-link mode operation is enabled: and set a subfield in a multi-link element within an association or reassociation response to a predetermined value indicating that said request is accepted; transmit said association or re-association response to said non- access point apparatus.

According to various, but not necessarily all, example embodiments of the disclosure there is provided a non-transitory computer readable medium comprising computer readable instructions stored thereon which when executed by a processor on a non-access point apparatus are operable to control said apparatus to: indicate to an access point apparatus that continuous multi-link mode operation is to be enabled by: setting a subfield in a multi-link element within an association or reassociation request to a predetermined value; and transmitting said association or re-association request to said access point apparatus.

According to various, but not necessarily all, example embodiments of the disclosure there is provided a non-transitory computer readable medium comprising computer readable instructions stored thereon which when executed by a processor on a non-access point apparatus are operable to control said apparatus to: receive an association or reassociation request from a non-access point apparatus; determine from a value of a subfield in a multi-link element that said non-access point apparatus requests that continuous multi-link mode operation is enabled: and set a subfield in a multi-link element within an association or reassociation response to a predetermined value indicating that said request is accepted; transmit said association or reassociation response to said non- access point apparatus.

The instructions may be for causing the apparatus to perform the optional features set out in relation to the methods mentioned above.

According to various, but not necessarily all, example embodiments of the disclosure there is provided a non-access point apparatus configured for multi-link communication, said non-access point apparatus comprising: means for indicating to an access point apparatus that continuous multi-link mode operation is to be enabled by setting a subfield in a multi-link element within an association or reassociation request to a predetermined value; and means for causing transmission of said association or re-association request to said access point apparatus.

The means may perform the optional features set out in relation to the apparatus mentioned above.

According to various, but not necessarily all, example embodiments of the disclosure there is provided an access point apparatus comprising: means for receiving an association or reassociation request from a non-access point apparatus; means for determining from a value of a subfield in a multi-link element that said non-access point apparatus requests that continuous multi-link mode operation is enabled: means for setting a subfield in a multi-link element within an association or reassociation response to a predetermined value indicating that said request is accepted; and means for causing transmission of said association or re-association response to said non-access point apparatus.

The means may perform the optional features set out in relation to the apparatus mentioned above.

According to various, but not necessarily all, example embodiments of the disclosure there is provided a non-access point apparatus configured for multi-link communication, said non-access point apparatus comprising: circuitry configured to indicate to an access point apparatus that continuous multi-link mode operation is to be enabled by generating an association or reassociation request and setting a subfield in a multi-link element within said association or reassociation request to a predetermined value; and circuitry configured to transmit said association or re-association request to said access point apparatus.

The circuitry may be configured perform the optional features set out in relation to the apparatus mentioned above.

According to various, but not necessarily all, example embodiments of the disclosure there is provided an access point apparatus comprising: circuitry configured to receive an association or reassociation request from a non-access point apparatus; circuitry configured to determine from a value of a subfield in a multi-link element that said non-access point apparatus requests that continuous multi-link mode operation is enabled; circuitry configured to generate an association or reassociation response and to set a subfield in a multi-link element within said association or reassociation response to a predetermined value to indicate that said request is accepted; a transmitter configured to transmit said association or re-association response to said non- access point apparatus.

The circuitry may be configured perform the optional features set out in relation to the apparatus mentioned above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION

Some example embodiments will now be described with reference to the accompanying drawings in which:

FIG. 1 illustrates configuration and setup signalling between non-access point and access point multilink enabled devices;
Fig. 2 illustrates further signalling between multilink enabled devices;
Fig 3 schematically illustrates steps in a method performed by a non-AP multi-link device according to an embodiment;
Fig 4 schematically illustrates steps in a method performed by an AP multi-link device according to an embodiment;
Fig. 5 schematically illustrates steps performed on two links by the AP and non-AP devices when operating in multilink continuous mode operation according to an embodiment;
Figs. 6 and 7 schematically illustrates fields and sub-fields of elements and frames transmitted in signalling during multi-link setup and configuration; and
Fig. 8 schematically show a non-AP multi-link device and an AP multi-link device according to an embodiment.

DETAILED DESCRIPTION

Before discussing the example embodiments in any more detail, first an overview will be provided.

Peak data rates for WLAN/Wi-Fi have increased by roughly four orders of magnitudes in the two and a half decades since its introduction. However, any technology operating in license-exempt bands is subject to uncontrolled interference which affect highly reliable operation. A lack of reliability is increasingly unacceptable and there are ultra-reliable low-latency communication (URLLC) requirements being introduced to provide a higher determinism in Wi-Fi communications. This is not an easy task, since medium access control (MAC) was originally designed upon carrier sense multiple access with collision avoidance (CSMA/CA) to cope with uncoordinated usage in the licensed-exempt spectrum, rather than prioritize determinism.

The development of a new amendment, IEEE 802.11 bn, has just started, targeting at defining the new functionalities of futuristic Wi-Fi 8 products.

WO2021244747 the entire contents of which are incorporated herein by reference, addressed the problem of increased latency in unlicensed spectrum due to the mandatory implementation of LBT (listen before talk) by means of establishing a nearly continuous channel access opportunity consisting of partially overlapping channel occupancy periods in different parts/sub-bands of the available spectrum. The devices involved were operable as multi-link devices configured to communicate on different channels.

It was recognised that in order to provide this continuous or nearly continuous channel access opportunity for multi-link devices then certain indications of device capabilities and procedural requirements should be exchanged. It was also recognised that the latest 802.11 be draft specifies new signalling to support multi-link operations and that this signalling is required to be exchanged for multi-link signalling to proceed. Embodiments seek to use or re-use certain fields or subfields within such signalling to provide information that allows the continuous or nearly continuous channel operation to proceed. In this way continuous or near-continuous channel access is provided with minimal additional signalling overhead.

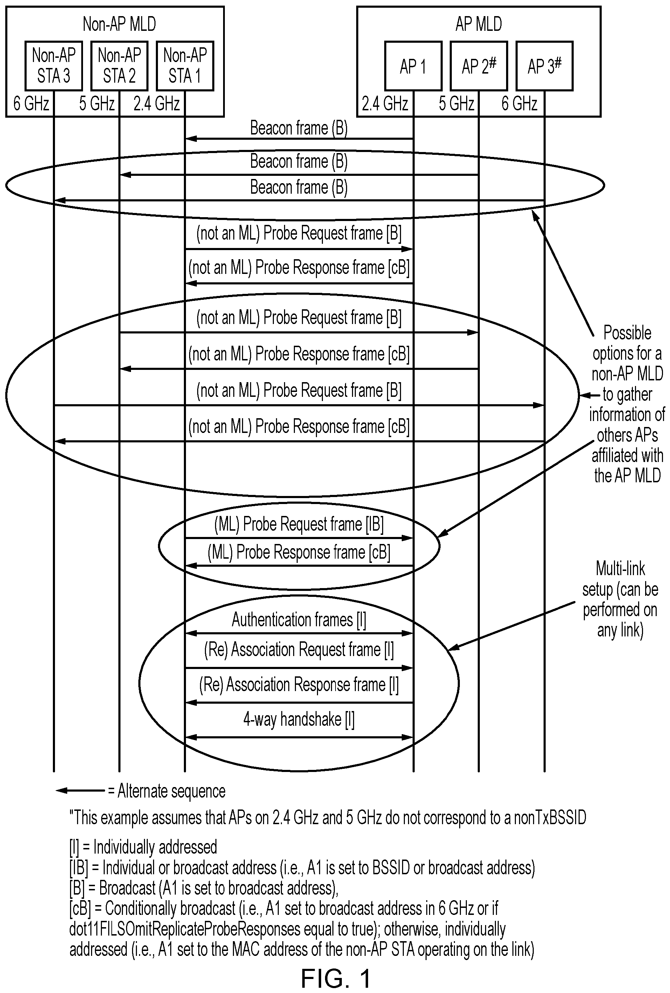

Fig. 1 shows an example signalling exchange between a non-access point multi-link device non-AP MLD 10 and an access point multi-link device, AP MLD 20 prior to and during a multi-link setup or re setup procedure.

The Multi-Link signalling element may be carried in Beacon, ML Probe Request, ML Probe Response and (Re) association Request/Response frames. Prior to utilizing (Re)Association Request/Response frame exchange to perform multi-link (re)setup with an AP Multi-Link Device (MLD), the non-AP MLD and AP MLD follow the authentication procedure (see Fig. 1). Signals that are broadcast are marked as (B), those that are sent to an individual or broadcast address are marked as (IB) and those that are conditionally broadcast are marked as (CB),

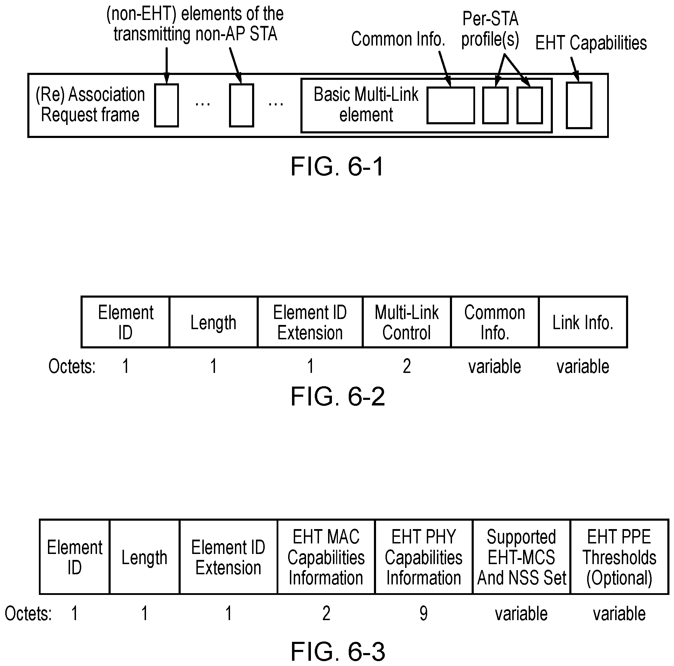

Once authentication has occurred, then multilink setup signalling is performed. This multi-link (re)setup procedure sets up link(s) between a non-AP MLD and an AP MLD and is completed through the exchange of (Re)Association Request and (Re)Association Response frames. A (Re)Association Request/Response frame exchange is for a multi-link setup only if both the (Re)Association Request frame and the (Re)Association Response frame include a Basic Multi-Link element (Fig. 6-1).

A non-AP MLD may initiate a ML (re)setup with an AP MLD to (re)set up one or more links with the AP MLD. When a non-AP MLD initiates a ML (re)setup with an AP MLD, the non-AP MLD shall transmit through a non-AP STA that is affiliated with the non-AP MLD and is operating on a link that is expected to be part of the ML (re)setup a (Re)Association Request frame.

Signals denoted by 30 are possible options for a non-AP MLD 10 to gather information about other APs affiliated with the AP MLD 20. Those denoted by 32 are the multi-link set up or reset up signals that can be performed on any of the links or channels and signals where embodiments use fields or subfields within this existing signalling to provide information indicating that continuous communication is to be initiated.

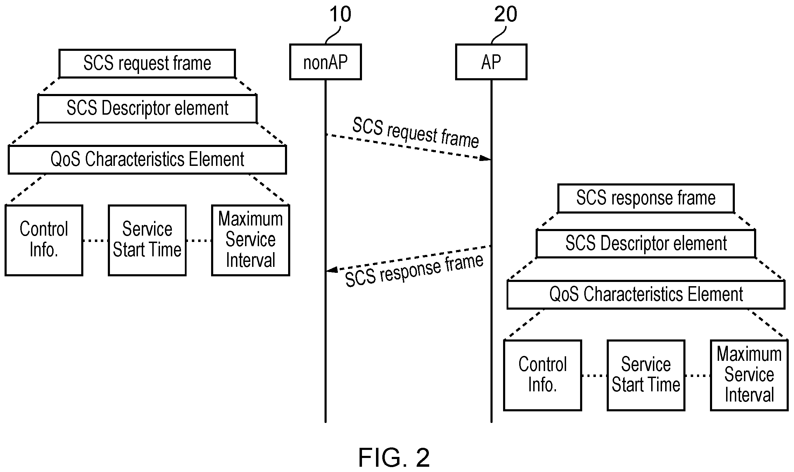

Fig.2 shows further signalling between non-AP MLD 10 and AP MLD 20 during multilink communication. This signalling may be amended to support the exchange of information required to allow the continuous communication to operate. The signalling comprises the stream classification signal SCS procedure which is conventionally used by a non-AP MLD 10 to request an AP MLD 20 to classify incoming individually addressed MSDUs (MAC service data unit) based on parameters provided by the non-AP MLD 10 and/or describe its traffic characteristics to an AP MLD 20. Where continuous mode operation is to be used, the non-AP MLD may initiate the SCS signalling by generating and transmitting an SCS Request frame.

Upon receipt of an SCS Request frame from an associated non-AP STA 10, the AP 20 shall respond with a corresponding SCS Response frame. A value of SUCCESS shall be set in the corresponding Status field of the SCS Status duple in the SCS Response frame when the AP accepts the SCS request for the requested SCSID. (from 802.11be D4.0).

A non-AP EHT STA with dot11 SCSActivated equal to true that supports transmission of SCS Request frames containing an SCS Descriptor element with a QoS Characteristics element shall set the SCS Traffic Description Support subfield value in the EHT Capabilities element that it transmits to 1.

A non-AP EHT STA may transmit an SCS Request frame with SCS Descriptor element(s) containing a QoS Characteristics element if the Request Type field in the frame is set to "Add" or "Change". The QoS Characteristics element describes the traffic characteristics of the requested SCS stream. It is this QoS characteristic element that may be adapted to exchange information allowing for continuous or near continuous communication.

The QOS element is contained in a SCS descriptor element of SCS Traffic description support. The QOS characteristics element in embodiments is used to exchange the required information that allows for continuous mode operation. Thus, it may be used to indicate the predetermined occupancy time such as the COT start time and duration of an acquired channel, such that the receiving device will know when the COT may be expected to end and thus, by which time a new COT should have been acquired. The QOS element may be in both an SCS request and an SCS response.

In summary a requirement for the enabling of the continuous or near continuous communication is the transfer of information between devices in a multi-link framework such as that which has been introduced in 802.11 be. The new 802.11bn (Wi-Fi 8) amendment seeks to extend the functionalities already present in 802.11be (Wi-Fi 7). Embodiments seek to transfer information between devices within this multi-link framework in way that is compatible with 802.11be messages format.

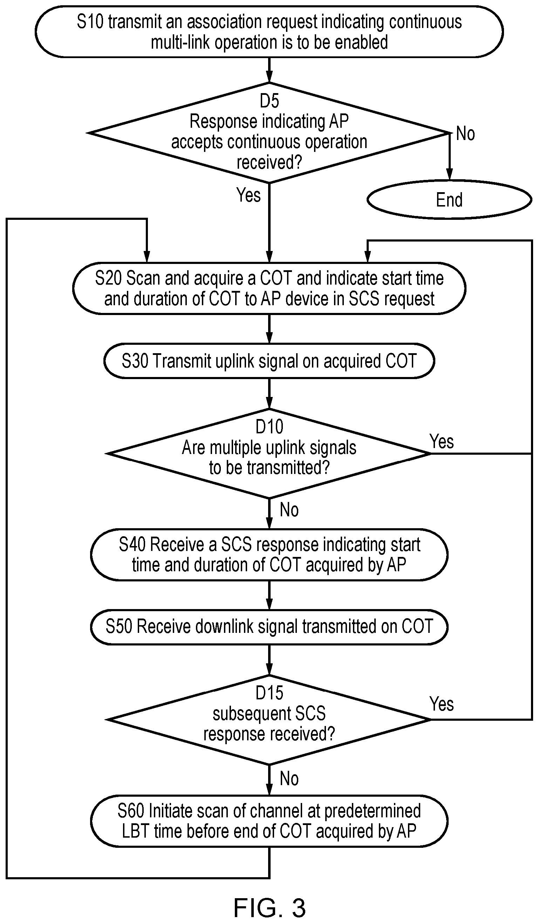

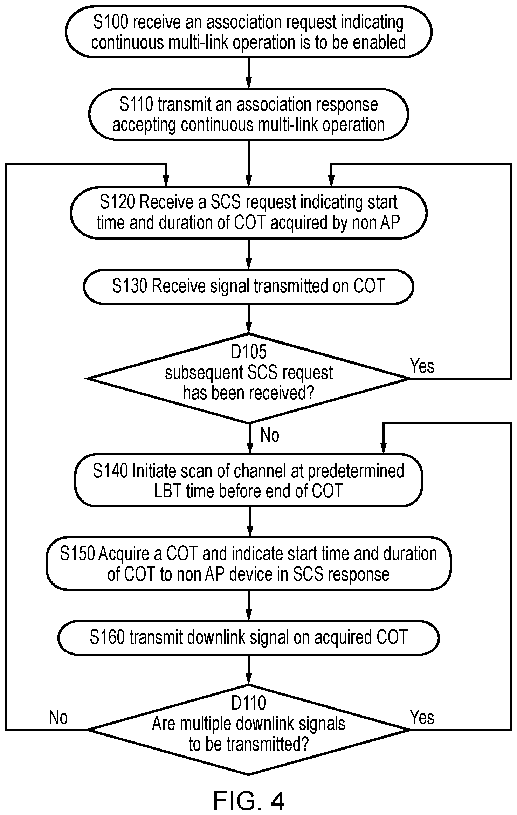

Fig. 3 shows steps in a method performed at a non-AP MLD device according to an embodiment, while Fig. 4 shows corresponding steps performed at an AP MLD. It should be noted that although these steps are shown in a certain order, some steps may be performed at the same time, or at overlapping times, or in a slightly different order.

In Fig. 3 at step S10 the non-AP device 10 generates and transmits towards an AP device 20, an association request that indicates continuous multilink operation is to be enabled. Device 10 monitors at step D5 for a response and if it receives a response from the AP device 10 indicating that the AP device 10 accepts continuous operation then it proceeds to step S20. If it receives a response indicating that the AP does not accept continuous operation, then this indicates that the AP does not support such operation and the attempt to enable this continuous multilink operation ends.

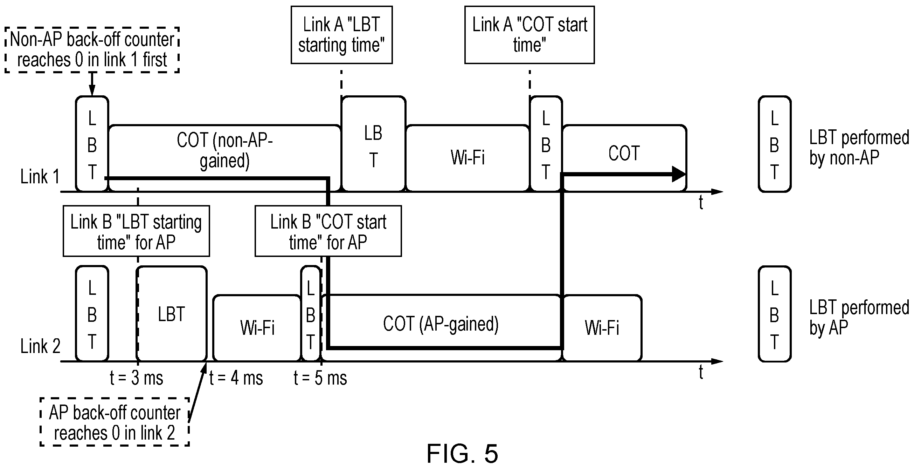

At step S20 the non-AP MLD device scans and acquires a COT and indicates the start time and duration of the COT to the AP device in a SCS request. The scanning and acquiring of the COT are shown in Fig. 5, the scanning being the LBT performed in link 1 by the non-AP MLD and the acquiring and use of the COT is the subsequent procedure on link 1.

The non-AP device will subsequently transmit an uplink signal on the acquired COT at step S30 and will determine at step D10 if multiple uplink signals are to be transmitted one after the other. The step of determining is performed following step S20, but may be before or during step S30. If multiple subsequent uplink signals are not to be transmitted then the method proceeds to step S40, whereas if there are multiple uplink signals then the method performs step S20 again of scanning and acquiring a COT for a different channel and transmitting an indication of the start time and duration of the newly acquired COT. These steps are performed before step S30 of transmitting the previous uplink signal completes. The method then performs step S30 of transmitting an uplink signal on the newly acquired COT to the AP.

At step S40 the non-AP device 10 may receive a SCS response from the AP indicating the start time and duration of a COT acquired by the AP. This again may be received before step S30 completes. The method may then at step S50 receive a downlink signal transmitted on this COT. At step D15 the non-AP device 10 then determines whether a subsequent SCS response is received. If it is, then it proceeds to step S40 to determine the start time and duration of the COT. If it does not then at step S60 it initiates a scan of a channel at a predetermined LBT time before the end of the COT acquired by the AP. It then returns to step S20 where it scans and acquires this COT and indicates the start time and duration of the COT to the AP device in a SCS request.

Fig. 4 shows steps performed in a method at an AP device 20 according to an embodiment. At step 100 the AP device receives an association request or a reassociation request indicating continuous multilink operation is to be enabled. This request is sent by the non-AP device as shown in step S10 of Figure 3. Assuming that the AP device does support continuous multilink operation it then responds at step S110 in this multilink operation. If it does not support multilink operation then it will not be able to decode the received request and will not respond indicating that it is accepted.

At step S120 the AP device may receive a SCS request indicating the start time and duration of the COT acquired by the non-AP device. It will then at step S130 receive a signal transmitted on this COT.

It will then determine at step D105 if a subsequent SCS request has been received. If it has then it will return to step 120, and determine from this request the start time and duration of the COT. It can then receive the signal transmitted on the COT. If it has not received the subsequent SCS request then at step S140 it will initiate a scan of a channel at a predetermined LBT time before the end of the current COT on which it is receiving a signal. At step S150 it will then acquire a COT and indicate the start time and duration of the COT to the non-AP device in an SCS response. It will then transmit the downlink signal on the acquired COT in a step S160. It will then determine at step D110 if multiple downlink signals are to be transmitted. If they are, it will then return to step S140 where it will initiate a scan of a channel at a predetermined LBT time before the end of the current COT. If they are not, then it will return to step S120 where it will receive a SCS request indicating start time and duration of the COT acquired by the non-AP.

Fig. 5 shows schematically how the non-AP and the AP devices perform the scanning of the channels during a LBT period and how they gain the channel occupancy time for transmission of signals and how the timing of the start of the scanning of the channel is set such that it completes just before the channel is required.

Fig. 5 shows how the non-AP MLD and the AP MLD may take it in turns to scan the channels and obtain a COT such that there is a COT available on one of the channels at all times.

In Step 1, the non-AP MLD indicates to the AP-MLD:

a) that it should enable the continuous multi-link operation mode, and
b) that the non-AP itself will be the "initiating" device in the first transmission of the continuous multi-link operation mode and that the "following" device should be the one receiving data in link P. This corresponds to step S10 of Fig. 3.

In practice, this entails that the role of "following" device will alternate between the non-AP and the AP, and that both devices should implement components of the proposed method.

In Step 2, The AP replies to the non-AP indicating that it agrees to operate in the continuous multi-link operation mode. This corresponds to step S100 of Fig. 4.

In Step 3, as per the agreement,

a) The non-AP will be the "initiating" device in the first COT, and
b) The AP will be the "following" device in the first COT.

In Step 4 and 5, after contending for channel access with LBT in both links, the non-AP obtains a COT and initiates an uplink transmission towards the AP in link 1 (see Fig.5), which is now labelled as "link P". As the "following" device, the AP initializes the COT timer to t = 0.

Since the AP has been deemed as the "following" device, it checks if

$$t > (\text{COTP-S start time} - \text{LBTS period length}),$$

for all S $\neq$ P,
where

The above operation is independently performed for the link S = 2, COTP-S start time is defined as the time-starting from the moment the COT in Link P started-from which a multi-link device is allowed to initiate a transmission in a different link (Link S).

The value of this parameter varies depending on the pair of links under consideration, i.e., Link P and Link S, are different per device, and should be dynamically and independently adjusted by the relevant device/s-both the AP and the STA (non-AP) in this embodiment.

LBTS period length is defined as the time spent by a device between 1) the start of the channel access contention in link S, and 2) the start of a transmission in link S. The "LBT period length" therefore includes the time such device 1) senses the channel free with the back-off counter equal to a non-zero value, and the 2) time one senses the channel occupied.

This disclosure provides a method for signalling between an access point (AP) multilink device (MLD) and a non-AP MLD supporting multi-link communication to enable continuous multi-link operation. By introducing new fields/sub-fields within the messages specified in 802.11be, this disclosure introduces a way of signalling and activating continuous operation between an access point (AP) multi-link device (MLD) and a non-AP MLD supporting multi-link communication.

This disclosure may significantly improve reliability and latency of communications carried out by future Wi-Fi 8 products. Here below, we propose a novel way of implementing/transmitting the steps, with relation to the 802.11be framework.

Embodiment I: We consider a scenario with a 802.11 compliant AP with multi-link capabilities and a 802.11-compliant non-AP with multi-link capabilities.

Linking to the steps outlined above when discussing Fig. 5, in Step 1, to indicate to the AP-MLD to enable the continuous mode operation, we propose the non-AP MLD to utilize the MLD Capabilities and Operations field of the Basic Multi-link element.

The AP MLD and non-AP MLD should have completed the Beacon Frame or Probe Request and Authentication frame exchange.

A non-AP MLD initiates a multi-link setup with an AP MLD to (re)set up one or more links with AP(s) with continuous mode operation affiliated with the AP MLD. When a non-AP MLD initiates a multi-link (re)setup with an AP MLD, a non-AP MLD that is affiliated with the non-AP MLD shall transmit a (Re)Association Request frame on the link 1 that it desires to use as part of the multi-link (re)setup.

The multilink setup procedure between a non-AP MLD and an AP MLD is completed through the exchange of (Re)Association Request and (Re)Association Response frames. A (Re)Association Request/Response frame exchange is for a multi-link setup only if both the (Re)Association Request frame and the (Re)Association Response frame include a Basic Multi-Link element.

For the purpose of this embodiment, the non-AP transmits an Association Request frame, the AP sends a (Re) Association response (see Fig. 1).

Specifically, we consider using the Basic Multi-Link element carried in the (Re)Association Request frame, that shall include the Common Info field.

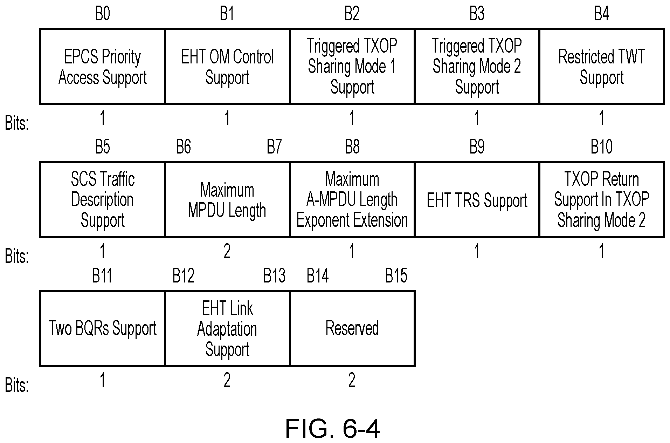

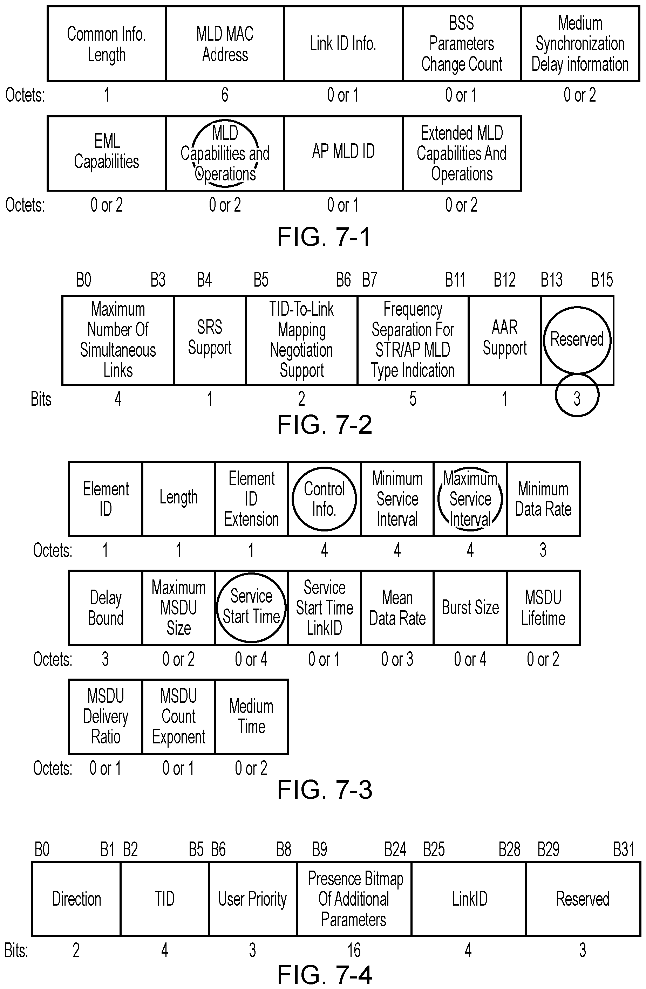

The format of the signalling exchanged during multi-link set up and that is adapted to provide the information required for initiation of continuous or near continuous communication is shown in Figs. 6 and 7.

The (re)Association Request may contain, as shown in Fig. 6-1, Common Info subelements in which the information of current link and the common information of all links affiliated with an AP MLD 20 are carried. The Multi-Link element may also contain zero or more Per-STA Profile sub-elements which are carried in the Link Info field as shown in Fig. 6-1. Each Per-STA Profile sub-element may be used to carry information related to the STA in question.

To indicate that the multi-link element is a Basic Multi-Link Element, as for 802.11be D3, the Type subfield of the Multi-Link Control field (which is shown in Fig 6.2) is set to 0.

In the (Re)Association Response frame, the AP MLD shall indicate the requested link(s) that are accepted and the requested link(s) that are rejected for (re)setup and the capabilities and operational parameters of the requested link(s). The AP MLD may do one of the following:

- accept all the links that are requested for (re)setup, or

- accept a subset of the links that are requested for (re)setup, or
- reject all the links that are requested for (re)setup.

Related to this idea, the EHT (extremely high throughput) Capabilities element is utilized by a STA (non-AP MLD) to declare that is a EHT STA. The EHT Capabilities element contains a number of fields that are used to advertise the EHT capabilities of an EHT STA (Fig. 6-3).

The format of the EHT MAC Capabilities Information field is set out in Fig. 6-4

The format is shown in Fig. 7-1 of the Common Info Field shown in Fig.6.2 .

In the context of continuous multi-link mode operation, the MLD MAC Address subfield specifies the MAC Address of the MLD described by the Basic multi-link element. The Link ID Info and AP MLD ID subfields in the Common Info field are not present if the Basic Multi-Link Element is sent by a non-AP STA, as happens in this embodiment.

The MLD Capabilities and Operations subfield is present in the Common Info field of the Basic Multi-Link element carried in a Beacon, Probe Response, (Re)Association Request, and (Re)Association Response. The proposal is to enable the continuous transmission in the MLD Capabilities and Operations subfield, sent in (Re) Association Request. The format of the MLD Capabilities and Operations subfield is shown in Fig 7-2. We propose to set the Reserved field is set to 1 to initiate the continuous multi-link mode activation.

In Step 2, the AP replies to the non-AP indicating that it agrees to operate in the continuous multi-link operation mode.

The format of the MLD Capabilities and Operations subfield is defined in Fig 7-2 and it is present in the Common Info Field of the Basic Multi-Link element carried in a Beacon, Probe Response, (Re) Association Request, and (Re) Association Response frames. To send the reply from the AP to indicate the agreement of the activation of the continuous multi-link operation mode we propose to use the MLD Capabilities and Operations subfield. In the MLD Capabilities and Operations subfield of the Association Response Frame the AP device can confirm the continuous mode operation setting the RESERVED FIELD as 2.

In Step 3, as per the agreement,

> a) The non-AP will be the "initiating" device in the first COT, and
> b) The AP will be the "following" device in the first COT.

The non-AP that transmitted the Basic Multi-link element will play the role of initiating the transmission.

The non-AP MLD itself will be the "initiating" device in the first transmission of the continuous multi-link operation mode and that the "following" device should be the one receiving data in link 1, the AP in this embodiment.

In Step 4 and 5, to inform the device taking the role of STA, the device taking the role of initiating device includes control information in its transmission. Such control information at least states that the non-AP device has acquired the COT and for which duration. Due to the alternation of UL and DL transmission (Fig. 5), the initiating device (the non-AP) needs to communicate the COTP-S start time and in some cases duration. The following message exchange provide an example for embodiment 1. The following characteristics are kept under consideration:

- The message used to communicate the COTP-S start time should contain a reserved or a time element in the frame
- Both the AP MLD and non-AP MLD have the possibility to send the message
- Is sent once the management frame of the association handshake in the multilink framework is completed

In this disclosure, we propose to include COTP-S start time and duration communication in the QoS Characteristics element (9.4.2.316) in the SCS signalling. The SCS procedure is used by a non-AP MLD to request an AP MLD to classify incoming individually addressed MSDUs based on parameters provided by the non-AP MLD and/or describe its traffic characteristics to an AP MLD. The traffic description support subfield indicates support for transmission and reception of an SCS descriptor element that contains a QoS subelement. These QOS subelements may be sent in a SCS request or response frame.

Upon receipt of an SCS Request frame from an associated non-AP STA, the AP shall respond with a corresponding SCS Response frame. A value of SUCCESS shall be set in the corresponding Status field of the SCS Status duple in the SCS Response frame when the AP accepts the SCS request for the requested SCSID.

Each SCS stream is identified by an SCSID. The SCSID is used by a non-AP STA to request creation, modification, or deletion of an SCS stream. The SCSID is used by an AP to identify an SCS stream in SCS responses.

The QOS Characteristics element (see Fig. 7-3) contains a set of parameters that define the characteristics and QoS expectations of a traffic flow, in the context of a particular non-AP EHT STA, for use by the EHT AP and the non-AP EHT STA in support of QOS traffic transfer using the procedures SCS and Restricted TWT.

The structure of the Control Info field is defined as Fig. 7-4.

The Direction subfield specifies the direction of data described by this element (Uplink/ Downlink/ Directed Link/Reserved), Table 9-401r.

The Service Start Time field contains an unsigned integer that specifies the anticipated time, in microseconds, when the traffic starts for the associated TID. The Service Start Time indicates to the AP the time when the STA expects to exchange frames corresponding to the TID specified in this element. The field represents the four lower order octets of the TSF timer associated to the link specified in the LinkID field at the start of the anticipated SP.

The Maximum Service Interval field contains the Maximum Service Interval field contains an unsigned integer that specifies the maximum interval, in microseconds, between the start of two consecutive SPs that are allocated to the STA for UL frame exchanges and the value 0 is reserved. We have considered here the case Uplink (direction subfield set to 0) that is related to embodiment I.

NOTE: We consider that Traffic requirement identification and transmission to be covered by the TID field of the MLD Capabilities and Operations of the Basic Multi-link Element.

The table below sets out examples of how the different information may be transmitted by setting fields or subfields to predetermined values in the different requests and responses exchanged between the AP and non-AP devices during multi-link setup and configuration.

| EMBODIMENT I | subfield | subfield | subfield | Value |
|---|---|---|---|---|
| Association Request | Common Info field of the Basic MultiLink element format | MLD Capabilities and Operations | Reserved | 1 |
| Association Response | Common Info field of the Basic Multi-Link element format | MLD Capabilities and Operations | Reserved | 2 |
| SCS Traffic Description Support | QoS Characteristics element format | Control Info | Direction | 0 (Uplink) |
| SCS Traffic Description Support | QoS Characteristics element format | Control Info | Service Start Time | unsigned integer |
| SCS Traffic Description Support | QoS Characteristics element format | Control Info | The Maximum Service Interval | unsigned integer |

Embodiment II: In a second embodiment (Embodiment II) we consider a non-AP MLD that, after the enabling of Continuous multi-link Operation Mode makes use of the continuous operation to send data in uplink with no interruption.

In this Embodiment, Step 1, 2 and 3 are similar as the corresponding steps in Embodiment I. Different to Embodiment I, in this Embodiment the UL transmission in Fig. 5 will be followed by another UL transmission. For each transmission, the non-AP needs to communicate the COTP-S start time and in some cases duration. In this case, the non-AP MLD initiate a SCS procedure to send the QoS element format relative to each data stream that intends to send.

Embodiment III: We consider a scenario with a 802.11 compliant non-AP with multilink capabilities and a 802.11-compliant AP without multi-link capabilities.

In this embodiment, the non-AP transmits an Association Request frame to enable the continuous multi-link mode operation. Similarly to Embodiment I, the Reserved field in the MLD Capabilities and Operations subfield is set to 1 to initiate the continuous multi-link mode activation.

In the case where the AP MLD is not enabled to setup a continuous mode operation, the reserved field of the MLD Capabilities and Operations will not be checked by the AP MLD receiving the Association Request. It follows that the AP MLD won't reply to the continuous mode operation request.

| EMBODIMENT II | subfield | subfield | subfield | Value |
|---|---|---|---|---|
| Association Request | Common Info field of the Basic Multi-Link element format | MLD Capabilities and Operations | Reserved | 1 |
| Association Response | Common Info field of the Basic Multi-Link element format | MLD Capabilities and Operations | Reserved | Ignored |

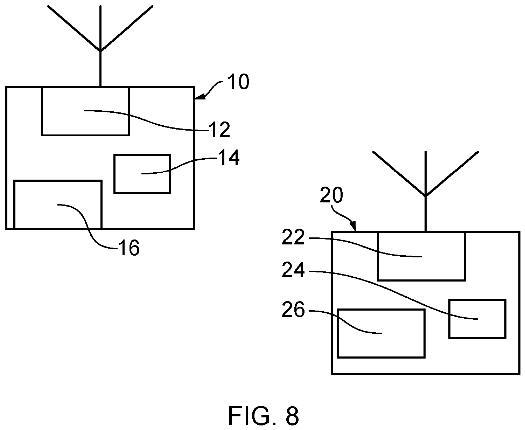

Fig. 8 shows a non-AP MLD device 10 according to an embodiment communicating over multiple channels with an AP MLD device 20.

The non-AP MLD device 10 comprises a transceiver 12 configured to transmit and receive signals on multiple channels, and signal generating circuitry 14 configured to generate signals for transmission by the transceiver 12 to the AP device 20 and channel monitoring circuitry 16 configured to control the transceiver to monitor particular channels.

The device 10 may initiate continuous mode operation by indicating to the AP device 20 that continuous multi-link mode operation is to be enabled by: generating a (re)association request and setting a subfield in a multi-link element of the request to a 1 and transmitting the association or re-association request to the AP device 20. The transceiver 12 may receive a response and where the AP device 20 agrees to operate in the continuous multi-link mode operation, the non-AP device 10 may use channel monitoring circuitry 16 to initiate the scanning of multiple channels and acquire one that is available for a predetermined occupancy time COT. Channel monitoring circuitry 16 may estimate how long it expects to take to scan and acquire a channel and may start the scanning process no later than this period of time before the end of the current COT. It may then indicate the acquired COT start time and duration to the AP device 20 using signal generating circuitry 14 to generate a SCS request and setting subfields in the request to values indicative of the start time and duration of the acquired COT. This may then be transmitted to the AP device.

The device 10 may, where multiple uplink signals are to be sent, repeat this procedure by scanning and acquiring a subsequent COT on another channel .

Where the device is to receive a downlink signal next, then transceiver 12 will receive a SCS response from the AP device 20 and this will include a start time and duration of a COT. It can then set transceiver 12 to receive the downlink signal.

The AP MLD device 20 comprises a transceiver 22 configured to transmit and receive signals on multiple channels, and signal generating circuitry 24 configured to generate signals for transmission by the transceiver 22 to the non-AP MLD device 10 and channel monitoring circuitry 26.

The device 20 may receive using transceiver 22 a (re)association request requesting continuous mode operation be enabled. It may respond by generating a (re)association response and setting a subfield in a multi-link element of the response to a 2 and transmitting the association or re-association response to the non-access point device 10. The transceiver 22 may then receive a SCS request indicating a start time and a duration of a COT acquired by the non-AP device 10. It may then receive an uplink signal in that COT. It may, where multiple uplink signals are to be sent, receive a subsequent SCS request indicating a further COT start time and duration. Alternatively, it may scan a different channel to that on which the uplink signal is (to be) sent using channel monitoring circuitry 26. It may start the scanning at a time that is an estimated time to scan and acquire a channel before the expiry of the current COT. When channel monitoring circuitry 26 determines a channel is available and acquires a COT, signal generating circuitry 24 will generate a SCS response signal where a subfield in the QoS element is set to a value indicative of a start time and duration of the acquired COT. This signal can then be transmitted to non-AP MLD device 10.

The signal generating circuitry and scanning circuitry may comprise one or more processors and a memory, the memory storing computer program instructions which when executed by the one or more processor generate signals and control the transceiver to monitor the required channels.

The non-access point MLD device or apparatus 10 may comprise a user equipment, a STA such as an augmented/ virtual reality station or UE.

The access point MLD apparatus or device 10 may comprise a Wi Fi access point, a gNB or a UE.

Although examples for AP and non-AP multi-link devices are given above, the communication could be between any two nodes configured to communicate using multiple channels in the unlicensed spectrum. For example, the communication may be a cellular sidelink communication, where a cellular device communicates directly with another without relaying its traffic via a base station. In this setting, one of the devices will take the role of AP (and therefore become the leading device) while the other device takes the role of non-AP. These roles can of course be interchanged as the communication progresses, especially if both devices cannot transmit-and-receive simultaneously in multiple links due to self-interference/hardware constraints. For these devices to establish the described operation in a sidelink context, explicit signalling may be used.

In summary this idea is part of a concept for enabling continuous transmission over Wi-Fi which is a paradigm shift with respect to current discontinuous channel access acquisition of Wi-Fi, and has the opportunity to significantly improve reliability and latency of communication in Wi-Fi 8 products.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**List of abbreviations**

- AP - Access Point
- COT Channel Occupancy Time
- EHT - Extreme High Throughput
- LBT - Listen Before Talk
- MLD - Multi-link Device
- QOS -Quality of Service
- SCS - Stream Classification Service
- TXOP - Transmission opportunity
- STA augmented/virtual reality station (STA)

**Claims**

1. A non-access point apparatus (10) configured for multi-link communication, said non-access point apparatus comprising at least one processor; and
at least one memory storing instructions that when executed by the at least one processor cause the apparatus at least to perform:
indicating to an access point apparatus (20) that continuous multi-link mode operation is to be enabled by:

setting a subfield in a multi-link element within an association or reassociation request to a predetermined value;
causing transmission of said association or re-association request to said access point apparatus.

2. A non-access point apparatus according to claim 1, wherein said subfield comprises a reserved subfield in a multi-link device capabilities and operations subfield within a common info field of said multi-link element.

3. A non-access point apparatus according to claim 1 or 2, wherein in response to receipt of an association or re-association response, said apparatus is caused to:

determine from a value within a multi-link device capabilities subfield of said response whether said access point apparatus agrees to operate in said continuous multi-link mode operation; and where so
to perform scanning and acquiring of a channel for a predetermined occupancy time.

4. A non-access point apparatus according to any preceding claims, said apparatus being caused to perform scanning and acquiring of a channel for a predetermined occupancy time by:

scanning at least one channel;
acquiring an available scanned channel for a predetermined occupancy time; and
indicating to said access point apparatus that said non-access point apparatus has acquired said channel for said predetermined occupancy time.

5. A non-access point apparatus according to claim 4, said non-access point apparatus being caused to indicate acquiring of said channel for said predetermined occupancy time to said access point apparatus by:

setting at least one subfield in a stream classification service SCS signal to a value indicative of at least one of the following: a start time of said acquired predetermined occupancy time and a duration of said acquired predetermined occupancy time; and
transmitting said SCS signal to said access point apparatus.

6. A non-access point apparatus according to claim 5, wherein said SCS signal comprises a SCS request.

7. A non-access point apparatus according to claim 6, wherein said subfield is within a quality of service QOS characteristic element.

8. A non-access point apparatus according to claim 7, wherein said start time of said acquired predetermined occupancy time is indicated by setting a service start time subfield to a value indicative of said predetermined occupancy time start time, said service start time subfield being within a control info field of said QOS characteristic element.

9. A non-access point apparatus according to any one of claims 5 to 8, wherein said duration of said acquired predetermined occupancy time is indicated by setting a maximum service interval subfield within said QOS characteristic element to a value indicative of said duration.

10. A non-access point apparatus according to any one of claims 5 to 9, wherein said non access point apparatus is configured to indicate to said access point apparatus that a plurality of communications using a plurality of acquired predetermined occupancy times are to be transmitted from said non-access point apparatus to said access point apparatus by transmitting at least one further SCS signal, said at least one further SCS signal indicating at least one further acquired predetermined occupancy time start time and duration.

11. A non-access point apparatus according to claim 10, wherein said non-access point apparatus is caused to start a scan (S60) of at least one other channel at a time that is an estimated time for said non-access point apparatus to perform said scan of said at least one other channel before an expiry of said indicated acquired predetermined occupancy time.

12. A non-access point apparatus according to any preceding claim, wherein said non-access point apparatus is caused to respond to receipt from said access point apparatus of an SCS signal indicating: a start time of an acquired predetermined occupancy time and a duration of said predetermined occupancy time by causing said non-access point apparatus to initiate scanning of a channel at a time that is an estimated time LBTs that said non-access point apparatus can scan and deem a channel available before an expiry of said indicated acquired predetermined occupancy time.

13. An access point apparatus (20) configured for multi-link communication, said access point apparatus comprising at least one processor; and

at least one memory storing instructions that when executed by the at least one processor cause the apparatus at least to perform:

receiving an association or reassociation request from a non-access point apparatus;

determining from a value of a subfield in a multi-link element that said non-access point apparatus requests that continuous multi-link mode operation is enabled: and

setting a subfield in a multi-link element within an association or reassociation response to a predetermined value indicating that said request is accepted;

causing transmission of said association or re-association response to said non- access point apparatus.

14. A method performed at a non-access point apparatus (10), said method comprising:

indicating (S10) to an access point apparatus that continuous multi-link mode operation is to be enabled by:

setting a subfield in a multi-link element within an association or reassociation request to a predetermined value;

transmitting said association or re-association request to said access point apparatus.

15. A method performed at an access point apparatus, said method comprising:

receiving (S100) an association or reassociation request from a non-access point apparatus;

determining from a value of a subfield in a multi-link element that said non-access point apparatus requests that continuous multi-link mode operation is enabled: and

setting a subfield in a multi-link element within an association or reassociation response to a predetermined value indicating that said request is accepted ;

transmitting (S110) said association or re-association response to said non-access point apparatus.

FIG. 1

FIG. 2

S10 transmit an association request indicating continuous multi-link operation is to be enabled

D5
Response indicating AP accepts continuous operation received?

No

End

Yes

S20 Scan and acquire a COT and indicate start time and duration of COT to AP device in SCS request

S30 Transmit uplink signal on acquired COT

D10
Are multiple uplink signals to be transmitted?

Yes

No

S40 Receive a SCS response indicating start time and duration of COT acquired by AP

S50 Receive downlink signal transmitted on COT

D15
subsequent SCS response received?

Yes

No

S60 Initiate scan of channel at predetermined LBT time before end of COT acquired by AP

FIG. 3

S100 receive an association request indicating
continuous multi-link operation is to be enabled

S110 transmit an association response
accepting continuous multi-link operation

S120 Receive a SCS request indicating start
time and duration of COT acquired by non AP

S130 Receive signal transmitted on COT

D105
subsequent SCS request
has been received?

Yes

No

S140 Initiate scan of channel at predetermined
LBT time before end of COT

S150 Acquire a COT and indicate start time and duration
of COT to non AP device in SCS response

S160 transmit downlink signal on acquired COT

D110
Are multiple downlink signals
to be transmitted?

No

Yes

FIG. 4

FIG. 5

(non-EHT) elements of the
transmitting non-AP STA

Per-STA
Common Info. profile(s)    EHT Capabilities

| (Re) Association Request frame | ☐ | ... | ☐ | ... | Basic Multi-Link element | ☐ | ☐ ☐ | ☐ |

FIG. 6-1

| Element ID | Length | Element ID Extension | Multi-Link Control | Common Info. | Link Info. |
|---|---|---|---|---|---|
| Octets: 1 | 1 | 1 | 2 | variable | variable |

FIG. 6-2

| Element ID | Length | Element ID Extension | EHT MAC Capabilities Information | EHT PHY Capabilities Information | Supported EHT-MCS And NSS Set | EHT PPE Thresholds (Optional) |
|---|---|---|---|---|---|---|
| Octets: 1 | 1 | 1 | 2 | 9 | variable | variable |

FIG. 6-3

| B0 | B1 | B2 | B3 | B4 |
|---|---|---|---|---|
| EPCS Priority Access Support | EHT OM Control Support | Triggered TXOP Sharing Mode 1 Support | Triggered TXOP Sharing Mode 2 Support | Restricted TWT Support |

Bits:

| 1 | 1 | 1 | 1 | 1 |
|---|---|---|---|---|
| B5 | B6          B7 | B8 | B9 | B10 |
| SCS Traffic Description Support | Maximum MPDU Length | Maximum A-MPDU Length Exponent Extension | EHT TRS Support | TXOP Return Support In TXOP Sharing Mode 2 |

Bits:

| 1 | 2 | 1 | 1 | 1 |
|---|---|---|---|---|
| B11 | B12          B13 | B14          B15 | | |
| Two BQRs Support | EHT Link Adaptation Support | Reserved | | |

Bits:

| 1 | 2 | 2 |
|---|---|---|

# FIG. 6-4

| Common Info. Length | MLD MAC Address | Link ID Info. | BSS Parameters Change Count | Medium Synchronization Delay information |
|---|---|---|---|---|
| 1 | 6 | 0 or 1 | 0 or 1 | 0 or 2 |

Octets:

| EML Capabilities | MLD Capabilities and Operations | AP MLD ID | Extended MLD Capabilities And Operations |
|---|---|---|---|
| 0 or 2 | 0 or 2 | 0 or 1 | 0 or 2 |

Octets:

## FIG. 7-1

| B0 — B3 | B4 | B5 — B6 | B7 — B11 | B12 | B13 — B15 |
|---|---|---|---|---|---|
| Maximum Number Of Simultaneous Links | SRS Support | TID-To-Link Mapping Negotiation Support | Frequency Separation For STR/AP MLD Type Indication | AAR Support | Reserved |
| 4 | 1 | 2 | 5 | 1 | 3 |

Bits

## FIG. 7-2

| Element ID | Length | Element ID Extension | Control Info. | Minimum Service Interval | Maximum Service Interval | Minimum Data Rate |
|---|---|---|---|---|---|---|
| 1 | 1 | 1 | 4 | 4 | 4 | 3 |

Octets:

| Delay Bound | Maximum MSDU Size | Service Start Time | Service Start Time LinkID | Mean Data Rate | Burst Size | MSDU Lifetime |
|---|---|---|---|---|---|---|
| 3 | 0 or 2 | 0 or 4 | 0 or 1 | 0 or 3 | 0 or 4 | 0 or 2 |

Octets:

| MSDU Delivery Ratio | MSDU Count Exponent | Medium Time |
|---|---|---|
| 0 or 1 | 0 or 1 | 0 or 2 |

Octets:

## FIG. 7-3

| B0 — B1 | B2 — B5 | B6 — B8 | B9 — B24 | B25 — B28 | B29 — B31 |
|---|---|---|---|---|---|
| Direction | TID | User Priority | Presence Bitmap Of Additional Parameters | LinkID | Reserved |
| 2 | 4 | 3 | 16 | 4 | 3 |

Bits:

## FIG. 7-4

FIG. 8

Europäisches
Patentamt

European
Patent Office

Office européen
des brevets

## EUROPEAN SEARCH REPORT

**Application Number**

EP 24 20 9582

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/244747 A1 (NOKIA TECHNOLOGIES OY [FI]) 9 December 2021 (2021-12-09) * abstract * * pages 9-24; figures 2,3 * | 1-15 | INV. H04W76/15 H04W84/12 |
| Y | "35. Extremely high throughput (EHT) MAC specification", IEEE DRAFT; TGBE_CL_35, IEEE-SA, PISCATAWAY, NJ USA , vol. 802.11be drafts, no. D3.0 31 January 2023 (2023-01-31), pages 1-186, XP068196287, Retrieved from the Internet: URL:https://grouper.ieee.org/groups/802/11 /private/Draft_Standards/11be/Draft%20P802 .11be_D3.0%20-%20Word.zip TGbe_Cl_35.doc [retrieved on 2023-01-31] * pages 1-38, 79-80, 181; figures 35-9, 35-10 * | 1-15 | |
| A | "11. MLME 11.1 Synchronization 11.1.1 General", IEEE DRAFT; REVME_CL_11.FM, IEEE-SA, PISCATAWAY, NJ USA , no. D0.1 29 June 2021 (2021-06-29), pages 1-473, XP068183259, Retrieved from the Internet: URL:http://www.ieee802.org/11/private/Draf t_Standards/11me/REVme_D0.1.rtf.zip REVme_Cl_11.fm.rtf [retrieved on 2021-06-29] * page 356-358, section 11.25.2 * | 1-15 | **TECHNICAL FIELDS SEARCHED (IPC)** H04W |

-/--

The present search report has been drawn up for all claims

| Place of search | Date of completion of the search | Examiner |
|---|---|---|
| Munich | 20 March 2025 | Perez Robles, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 24 20 9582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "9. Frame formats 9.2 MAC frame formats 9.2.4 Frame fields 9.2.4.1 Frame Control field 9.2.4.1.3 Type and Subtype fields", IEEE DRAFT; TGBE_CL_09, IEEE-SA, PISCATAWAY, NJ USA , vol. 802.11be drafts, no. D1.4 27 January 2022 (2022-01-27), pages 1-138, XP068187966, Retrieved from the Internet: URL:https://grouper.ieee.org/groups/802/11 /private/Draft_Standards/11be/Draft%20P802 .11be_D1.4%20-%20Figure%20Sources.zip Draft P802.11be_D1.4 - Word.zip TGbe_Cl_09.doc [retrieved on 2022-01-27] * pages 52-54, sections 9.3.3.5-9.3.3.8; pages 99-101, sections 9.4.2.313.1-9.4.2.313.2 * | 1-15 | |

----- 

**TECHNICAL FIELDS SEARCHED (IPC)**

The present search report has been drawn up for all claims

| Place of search | Date of completion of the search | Examiner |
|---|---|---|
| Munich | 20 March 2025 | Perez Robles, Eva |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 9582

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|
| WO 2021244747 A1 | 09-12-2021 | CN 115699953 A | 03-02-2023 |
| | | EP 4162746 A1 | 12-04-2023 |
| | | US 2023232449 A1 | 20-07-2023 |
| | | WO 2021244747 A1 | 09-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021244747 A